# FASCICULE DE BREVET EUROPEEN

(11) **EP 2 786 629 B1**
(45) Date de publication et mention de la délivrance du brevet: **05.08.2020**
(21) Numéro de dépôt: 12798691.7
(22) Date de dépôt: 30.11.2012
(51) Int. Cl.: H04W 4/06, H04W 72/04, H04W 72/00, H04W 84/18, H04W 4/02

(54) **PROCÉDÉ DE COMMUNICATION DANS UN RÉSEAU AD HOC, STATION ÉMETTRICE/RÉCEPTRICE ET PROGRAMME D'ORDINATEUR ASSOCIÉS**
VERFAHREN ZUR KOMMUNIKATION IN EINEM AD-HOC-NETZWERK, SENDE-/EMPFANGSSTATION UND ZUGEHÖRIGES COMPUTERPROGRAMM
METHOD OF COMMUNICATING IN AN AD HOC NETWORK, TRANSMITTING/RECEIVING STATION AND ASSOCIATED COMPUTER PROGRAMME

(30) Priorité: 02.12.2011 FR 1103693
(43) Date de publication de la demande: 08.10.2014
(73) Titulaire: THALES, 92200 Neuilly-sur-Seine (FR)
(72) Inventeur: SOULIE, Antoine, 92622 Gennevilliers Cédex (FR)
(74) Mandataire: Lavoix
(86) Numéro de dépôt international: PCT/EP2012/074165
(87) Numéro de publication internationale: WO 2013/079703

(56) Documents cités:
- EP-A2- 2 141 945
- US-A1- 2008 009 308
- SUN-JOONG YOON ET AL: "A novel geocasting protocol for multi-interface tactical ad hoc networks", UBIQUITOUS AND FUTURE NETWORKS (ICUFN), 2011 THIRD INTERNATIONAL CONFERENCE ON, IEEE, 15 juin 2011 (2011-06-15), pages 208-213, XP032003669, DOI: 10.1109/ICUFN.2011.5949163 ISBN: 978-1-4577-1176-3
- TSENG Y-C ET AL: "An architecture for power-saving communications in a wireless mobile ad hoc network based on location information", MICROPROCESSORS AND MICROSYSTEMS, IPC BUSINESS PRESS LTD. LONDON, GB, vol. 28, no. 8, 4 octobre 2004 (2004-10-04), pages 457-465, XP004559833, ISSN: 0141-9331, DOI: 10.1016/J.MICPRO.2004.05.002
- ERDAL CAYIRCI ET AL: "Application of 3G PCS Technologies to Rapidly Deployable Mobile Networks", IEEE NETWORK, IEEE SERVICE CENTER, NEW YORK, NY, US, vol. 16, no. 5, 1 septembre 2002 (2002-09-01), pages 20-27, XP011093515, ISSN: 0890-8044

## Description

La présente invention concerne les radiocommunications entre des nœuds d'un réseau ad hoc.

De manière connue, un réseau ad hoc est dépourvu d'infrastructure fixe et des stations équipés de moyens d'émission et/ou réception radio et de protocoles adéquats forment les nœuds du réseau et communiquent entre elles par l'intermédiaire d'un canal radio, ou de plusieurs canaux radio, partagé(s).

Les réseaux ad hoc sont notamment utilisés pour mettre en œuvre des communications tactiques entre des équipes militaires mobiles sur des zones de combat. Par exemple, chaque équipe est dotée d'une station d'émission/réception radio qui constitue un nœud du réseau. Plusieurs équipes sont généralement regroupées en des groupes, les équipes au sein d'un même groupe relevant par exemple d'un même commandement hiérarchique.

Les besoins en communication au sein d'un tel réseau ad hoc sont de deux types :
- les communications réservées aux équipes d'un même groupe constitué et relatives généralement aux services hiérarchiques ; ces communications ont pour émetteur et destinataire des nœuds d'un même groupe et ne peuvent transiter que par des nœuds de ce groupe ; et
- les communications relatives aux services géographiques, qui dépendent uniquement de la proximité des nœuds et non du groupe d'appartenance du nœud. On appellera ci-dessous, communications ou messages géographiques ou transverses, ces communications ou messages dont le relayage est basé uniquement sur la proximité géographique et non sur l'appartenance à un groupe.

Un problème rencontré dans les communications tactiques est la faible capacité de chaque canal radio (par exemple, un canal radio VHF a une largeur de 25 kHz), qui limite la capacité du réseau ad hoc et donc le nombre de nœuds qui peuvent y être mis en œuvre, ou encore qui limite les services qui peuvent leur être rendus.

Une première solution pour résoudre ce problème est d'accroître la largeur d'un canal, par exemple en la montant à 75 kHz pour un canal VHF, ce qui permet d'accroitre le débit disponible pour les services géographiques.

Une deuxième solution pour résoudre ce problème est d'utiliser de manière non simultanée différents canaux de 25 KHz, pour des besoins de communications propres, i.e. internes, à chaque groupe. Chaque groupe est limité en nombre de nœuds. Chaque groupe dispose pendant seulement une fraction de la trame radio, d'un canal qui lui est dédié. Différents groupes peuvent utiliser différents canaux de 25 kHz au même moment, ce qui permet d'accroître globalement le débit et les services rendus. Afin de permettre une communication commune à tous les groupes, un canal passerelle commun doit être établi sur une autre fraction de la trame.

Le principal inconvénient de la première solution réside dans sa moindre portée, à puissance équivalente, ce qui, par voie de conséquence, nécessite de redévelopper de nouvelles couches protocolaires et de mise en réseau, pour tirer parti de l'accroissement de la largeur de bande. Cette première solution ne permet ainsi pas de résoudre simultanément le maintien de la portée et l'élargissement du débit pour des communications transverses.

Le principal inconvénient de la deuxième solution réside dans le manque de capacité du canal passerelle qui est nécessaire pour les services géographiques basés sur la proximité géographique des nœuds communicants et qui peuvent donc correspondre donc à des communications entre nœuds d'un même groupe ou entre nœuds de groupes distincts. Cette deuxième solution permet d'accroître le débit pour les communications de groupe, mais ne permet pas d'accroitre le débit pour les communications transverses.

On connaît par ailleurs Sun-Joong Yoon et al « A novel geocasting protocol for multi-interface tactical ad hoc networks », Ubiquitous and future network (ICUFN), 2011 third international conference, IEEE, 15 juin 2011, pages 208-213, qui décrit un protocole de communication dans un réseau de communication tactique et comprenant une première phase de « packet forwarding » d'une source à une région de distribution, et une deuxième phase de « local flooding » au sein de cette région.

Tseng Y-C et Al « An architecture for power-saving communications in a wireless mobile ad hoc network based on location information », Microprocessors and microsystems, IPC business press LTD. London, GB, vol. 28, no. 8, est relatif à une architecture permettant de réduire la consommation dans un réseau de communication ad hoc, sur la base d'informations de localisation et d'un partitionnement du réseau en cellules dites « grids »

Erdal Cayirci et Al « Application of 3G PCS technologies to rapidly deployable mobile networks » IEEE networks, IEEE service center, New York, US, vol. 16, no. 5, 1er septembre 2002, pages 20-27, décrit une architecture pour les réseaux mobiles
rapidement déployables, sur la base d'une décomposition de l'aire de communication en cellules virtuelles et d'une affectation de ressources radio à ces cellules virtuelles.

Le document EP 2 141 945 concerne l'allocation de canaux dans un système de nœuds ad hoc. L'aire de communication est divisée en cellules et chaque cellule est elle-même répartie en 6 sous-zones, tandis que deux ensembles de canaux attribués à chaque cellule sont distribués entre les sous-zones.

Le document US 2008/009308 concerne un procédé de communication radio en mode direct.

La présente invention a pour objet de permettre d'accroître les ressources disponibles pour les communications transverses.

Ainsi suivant un premier aspect, l'invention propose un procédé de communication selon l'objet de la revendication 1.

La présente invention permet d'accroître des capacités de transmission des communications transverses d'un réseau ad hoc.

Dans des modes de réalisation, l'invention présente en outre une ou plusieurs des caractéristiques selon les revendications 2 à 4.

Suivant un deuxième aspect, l'invention propose une station émettrice/réceptrice selon l'objet de la revendication 5.

Dans des modes de réalisation, la station émettrice/réceptrice présente en outre une ou plusieurs des caractéristiques selon la revendication 6 ou 7.

Suivant un troisième aspect, l'invention propose un programme d'ordinateur selon la revendication 8.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une vue d'un nœud d'un réseau ad hoc mettant en œuvre un mode de réalisation de l'invention ;
- la figure 2 est un organigramme d'un procédé dans un mode de réalisation de l'invention ;
- la figure 3 est une vue de la répartition temporelle et fréquentielle de la communication des nœuds relativement à différents canaux radio;
- la figure 4 est une vue de nœuds dans des cellules géographiques dans un mode de réalisation de l'invention ;
- la figure 5 est une vue de cellules géographiques dans un autre mode de réalisation de l'invention ;
- la figure 6 est une vue de nœuds dans des cellules géographiques dans un mode de réalisation de l'invention.

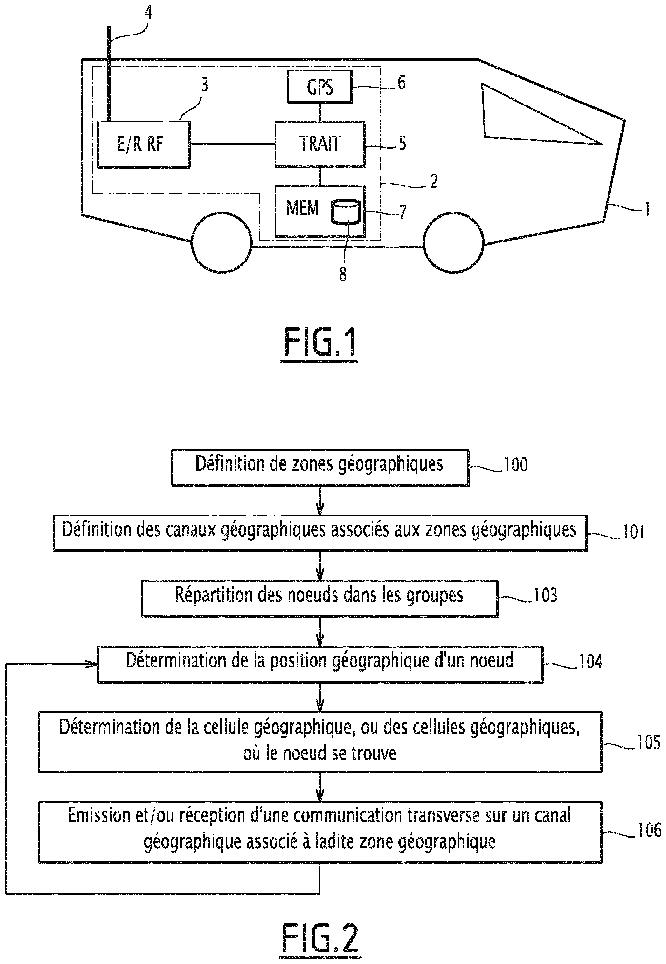

Sur la figure 1 est représentée un véhicule blindé 1 doté d'une station émettrice/réceptrice 2 destinée à constituer un nœud 2 d'un réseau ad hoc.

Un nœud 2 comporte un module de traitement 5, un module GPS 6 et une mémoire 7.

La mémoire 7 comporte une base de données 8.

Le module de traitement 5 est adapté pour piloter le fonctionnement des différents composants du nœud 2 et comporte notamment un microcontrôleur sur lequel des logiciels stockés en mémoire 7 s'exécutent.

Un nœud 2 comporte en outre, en vue d'échanger des trames de signal avec un nœud voisin, par l'intermédiaire d'un canal radio partagé, un module radio d'émission/réception radiofréquence 3 relié à une antenne 4.

Le module radio 3 comprend une couche d'accès au milieu MAC (Médium Access Control), une couche physique Bande de Base, une couche physique radio fréquence. Le module radio 3 est adapté pour, sous le pilotage de l'unité de traitement 5, recevoir et traiter un signal radio fréquence en provenance de l'antenne 4, ou permettre l'élaboration et l'émission d'un signal radio fréquence depuis l'antenne 4.

Dans un mode de réalisation, les signaux échangés sont conformes au protocole au protocole IEEE 802.11 ou à des protocoles non standardisés en vigueur dans le domaine des radiocommunications militaires, et comportent par exemple des données de communications vocales, des messages de type SMS, MMS ou de messagerie instantanée.

Dans le mode de réalisation considéré, le module radio 3 est adapté pour opérer, sous le pilotage du module de traitement 5, en mode de communication half-duplex.

En référence à la figure 2, dans un mode de réalisation de l'invention, les étapes suivantes sont mises en œuvre.

Certaines au moins de ces étapes, notamment celles mises en œuvre au sein d'un nœud, sont réalisées suite à l'exécution sur le microcontrôleur du module de traitement 5 du nœud, d'instructions logicielles correspondantes stockées em mémoire 7.

Dans une étape 100, des zones géographiques sont définies sur au moins une zone Z correspondant à une partie de la surface géographique susceptible d'être occupée par des véhicules constituant des nœuds d'un réseau ad hoc. Ces nœuds sont similaires au nœud 2 représenté en figure 1.

Dans un mode de réalisation, certaines de ces zones géographiques sont adjacentes ou se chevauchent partiellement.

Dans une étape 101, un canal radio est défini pour chacune de ces zones géographiques. Un tel canal radio est appelé canal radio géographique. Deux zones géographiques adjacentes ou se chevauchant se voient attribuer un canal distinct.

Pour la réalisation de ces étapes 100, 101, par exemple, il est déterminé, à l'aide d'un calculateur, la taille, la position et le canal affecté à chacune de cellules en fonction de la portée moyenne du module radio 3 mis en œuvre dans un nœud 2 (typiquement 15-20 km).

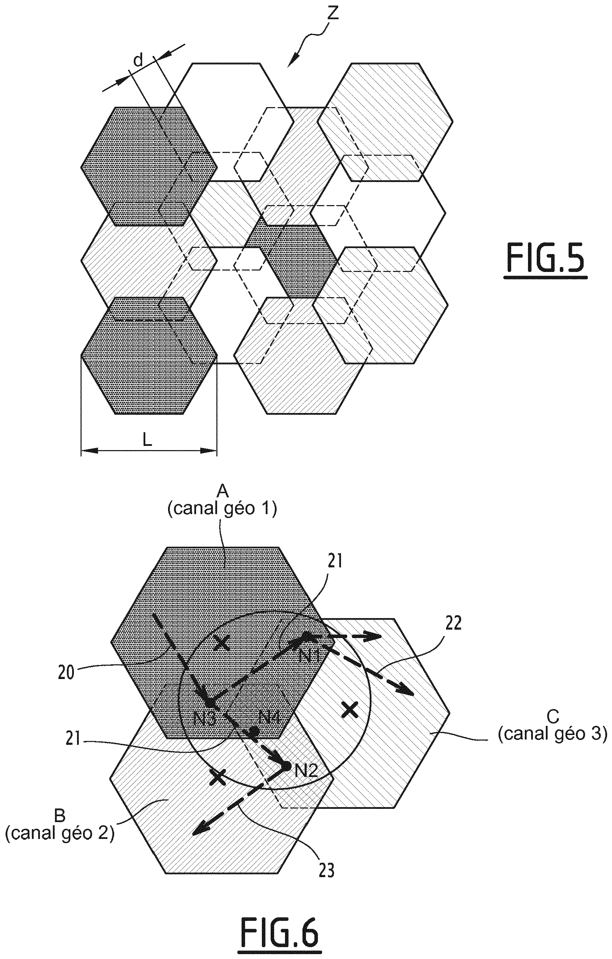

Par exemple, la zone Z est décomposée en cellules hexagonales, agencées de telle manière qu'un chevauchement partiel entre 3 cellules est obtenu, comme représenté en figure 5. Dans le cas de la figure 5, le chevauchement est de longueur d égale à 4 km et un même canal géographique est affecté à des cellules comportant le même type de remplissage sur la figure 5.

Le découpage de la zone Z en cellules, ainsi que le canal géographique affecté à chacune de ces cellules sont téléchargés dans la base de données 8 de la mémoire 7 de chacun des nœuds 2. Dans un autre mode de réalisation, l'algorithme et les paramètres permettant de déterminer le découpage et/ou l'affectation sont mémorisés dans la mémoire 7 du nœud 2.

Dans une étape 103, un opérateur détermine la constitution des groupes. Chaque véhicule, et par là même, chaque nœud, est affecté à un groupe. La correspondance entre les différents nœuds/véhicules et les groupes est mémorisée dans la base de données 8 de chaque nœud 2. On notera que cette étape 103 peut être réalisée avant l'étape 101 et/ou l'étape 100. Un canal radio de groupe distinct est affecté à chaque groupe. Les communications réservées à un groupe sont transmises et reçues uniquement sur le canal de ce groupe (des changements d'allocation de canal de groupe peuvent bien sûr intervenir relativement à un groupe).

L'ensemble d'étapes 104 à 106 est ensuite mise en œuvre régulièrement par chacun des nœuds.

Dans une étape 104, le nœud 2 détermine sa position géographique courante à l'aide de son module GPS 6 et la mémorise dans sa base de données 8.

En fonction de cette position géographique ainsi déterminée, et de la définition des cellules géographiques mémorisées dans sa base de données 8, le nœud 2 détermine la cellule géographique ou les cellules géographiques au sein de laquelle, ou desquelles, il est situé, dans une étape 105.

Lorsqu'il se trouve au sein de plusieurs cellules géographiques, il sélectionne l'une d'entre elles en fonction de critères qui peuvent être divers et dont certains sont proposés ci-après.

Puis, dans une étape 106, à l'occasion d'une communication transverse à opérer en réception et/ou en émission, le nœud 2 reçoit et/ou émet cette communication transverse sur le canal géographique associé, dans la base de données 8, à ladite cellule géographique déterminée et, le cas échéant, sélectionnée.

Notamment si le nœud 2 doit transmettre des données à l'extérieur de son groupe, il utilisera de préférence ce canal géographique dans la mesure ou des nœuds d'un autre groupe s'est signalé sur ce canal géographique.

Les étapes 104 à 106 sont réitérées, à intervalles réguliers (par exemple toutes les 15 minutes), et également suite à des déplacements du nœud 2 ou des déplacements de nœuds du même groupe et/ou d'autres groupes.

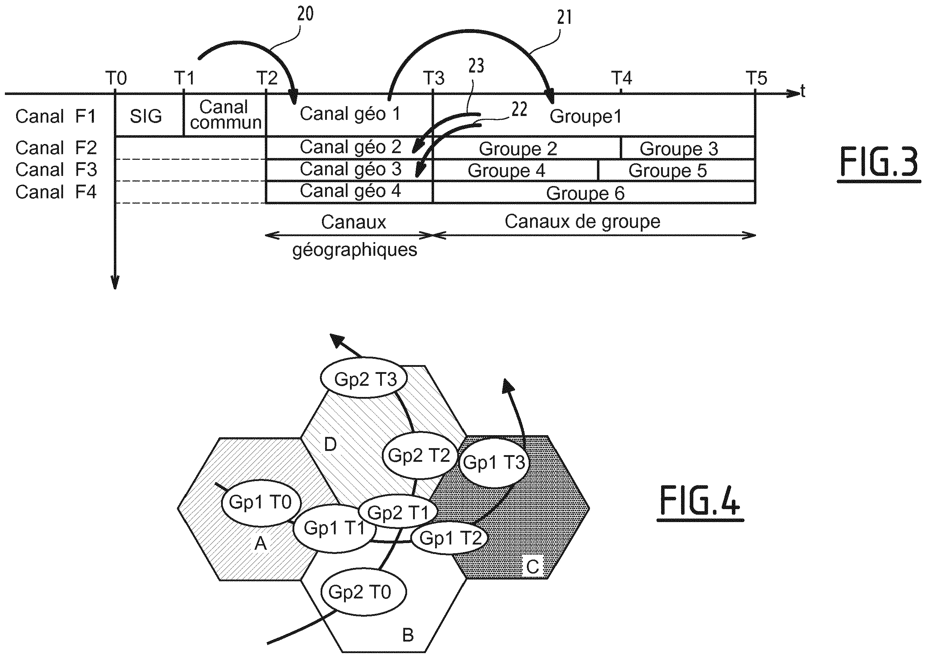

Sur la figure 3 est représenté un plan d'affectation de canaux radio dans un mode de réalisation de l'invention et un cycle temporel d'utilisation de ces canaux radio par les nœuds, en fonction notamment de leur position géographique et de leur groupe d'appartenance.

L'axe horizontal représente l'axe des temps. Un cycle de communication mis en œuvre par chaque nœud 2 s'écoule entre T0 et T5, correspondant à la durée d'une trame radio.

Quatre canaux radio distincts sont considérés : canal F1, canal F2, canal F3, canal F4. Chacun de ces canaux est un canal VHF, d'une largeur de 25 kHz. Ils sont disjoints. L'affectation de ces canaux est répartie dans le temps en divers canaux de signalisation, de groupe, géographique, commun.

Ainsi on notera qu'un canal de signalisation SIG correspond à une période T0-T1 d'un cycle sur le canal F1 et qu'un canal commun correspond à une période T1-T2 d'un cycle sur le canal F1 .

Par ailleurs, un canal géographique n°1 correspond à la période T2-T3 du canal radio canal F1, un canal géographique n°2 correspond à la période T2-T3 du canal radio canal F2, le canal géographique n°3 correspond à la période T2-T3 du canal radio canal F3, un canal géographique n°4 correspond à la période T2-T3 du canal radio canal F4.

Le canal de groupe affecté au groupe n°1 de nœuds correspond à la période T3-T5 du canal F1 et le canal de groupe affecté au groupe n°6 de nœuds correspond à la période T3 à T5 du canal F4.

Le canal de groupe affecté au groupe n°4 de nœuds correspond à la période T3-T4 du canal F2, tandis que le canal de groupe affecté au groupe n°3 de nœuds correspond à la période T4-T5 du canal F2.

Et le canal de groupe affecté au groupe n°4 de nœuds correspond à la période T3-T4 du canal F3, tandis que le canal de groupe affecté au groupe n°5 de nœuds correspond à la période T4-T5 du canal F3.

Ainsi chaque nœud 2 est adapté, lors d'une trame, pour mettre en œuvre des échanges de signalisation sur le canal SIG, pendant la période T0-T1. Il est en outre adapté pour mettre en œuvre le cas échéant des communications transverses, en réception et/ou en émission sur le canal commun, pendant la période T1-T2.

Chaque nœud 2 est en outre adapté pour mettre en œuvre des communications transverses, en émission et/ou réception, sur le canal géographique déterminé en fonction de sa position géographique, pendant la période T2-T3.

Et par ailleurs, chaque nœud 2 est en outre adapté pour mettre en œuvre des communications transverses, en émission et/ou réception, sur son canal de groupe, pendant une fraction ou la totalité selon les groupes, de la période T3-T5.

Dans le mode de réalisation considéré, le module radio 3 d'un nœud 2 fonctionne en half-duplex, pour chacun des canaux SIG, canal commun, canal géographique et canal de groupe.

Par ailleurs, l'accès aux canaux géographiques et/ou de groupe est conforme à un protocole basé sur un accès multiple en CSMA ou en TDMA, voir CDMA, FDMA ou OFDMA. Dans un mode de réalisation, des canaux radio orthogonaux sont alloués à des canaux géographiques, et les transmissions sont réalisées en OFDMA à la fois dans des canaux de groupes et des canaux géographiques, orthogonaux entre eux dans le domaine fréquentiel.

Ainsi l'utilisation des canaux géographiques, en plus de l'utilisation du canal commun lorsqu'il existe, permet d'accroître le débit des communications transverses.

Différentes situations de mise en œuvre de l'invention sont commentées ci-dessous.

Dans ces situations, il est considéré que chaque nœud émet, sur son canal de groupe, sa position couramment déterminée, et que par conséquent, chaque nœud reçoit sur son canal de groupe, des informations de position courante d'autres nœuds de son groupe.

Sur la figure 4 sont représentées 4 cellules géographiques A, B, C, D issues d'une étape similaire à l'étape 100. Chacune de ces cellules géographiques A, B, C, D est associée, lors d'une étape similaire à l'étape 102, à un canal géographique, respectivement n°1, n°2, n°3 et n°4.

On considère les placements, à différents instants T0, T1, T2 et T3, de deux groupes de nœuds mobiles : le groupe n°1, référencé Gp1 en figure 4, et le groupe n°2 référencé Gp2 en figure 4, associés chacun à un canal de groupe respectif.

La répartition des ressources radio est par exemple celle illustrée en figure 3 et détaillée ci-dessus.

A chaque instant, les nœuds d'un même groupe peuvent communiquer entre eux, par l'intermédiaire du canal de groupe associé au groupe, éventuellement par bonds successifs entre des nœuds intermédiaires situées à portée radio l'un de l'autre, notamment pour des communications hiérarchiques.

Dans le cadre de communications transverses à réaliser, par exemple, un message émis à l'origine par un nœud d'un groupe donné en un point géographique donné, informe de la présence du véhicule embarquant ce nœud en ce point géographique donné. Un tel message doit être envoyé à tous les nœuds de tous les groupes situés à N km à la ronde autour du point donné (par exemple N est égal à 5 km), par exemple pour éviter que ce véhicule, éventuellement banalisé, ne soit pris pour cible par les autres véhicules embarquant des nœuds ad hoc. Le message indique en outre cette portée géographique cible du message.

A l'instant T0, le groupe Gp1 se situe dans la cellule A, tandis que le groupe Gp2 se situe dans la cellule B. Les nœuds du groupe Gp1, pendant la période T2-T3 de chaque cycle, utilisent en émission/réception le canal géographique 1 associé à la cellule A. En particulier, au moins un nœud du groupe Gp1, voire chaque nœud du groupe Gp1, s'est signalé comme représentant du groupe n°1, présent sur ce canal géographique.

Similairement, les nœuds du groupe Gp2 pendant la période T2-T3 de chaque cycle, utilisent en émission/réception le canal géographique 2 associé à la cellule B. En particulier, au moins un nœud du groupe Gp2, voire chaque nœud du groupe Gp2, s'est signalé comme représentant du groupe n°2, présent sur ce canal géographique.

Comme lors de leur écoute du canal géographique n°1, les nœuds du groupe 1 n'ont pas détecté la présence de nœuds d'autres groupes, les nœuds du groupe n°1 ont déterminé que seul leur groupe était dans la cellule A.

De même, comme lors de leur écoute du canal géographique n°2, les nœuds du groupe n°2 n'ont pas détecté la présence de nœuds d'autres groupes, les nœuds du groupe n°2 ont déterminé que seul leur groupe était dans la cellule B.

Comme aucun nœud d'un autre groupe que le groupe Gp1 n'est présent sur le canal n°1, lorsqu'une communication d'un message transverse est alors à mener par le groupe Gp1, le canal de groupe n°1 est utilisé pour relayer entre nœuds du groupe Gp1 ce message transverse, tandis que le message est en outre propagé par un nœud, ou plusieurs nœuds, du groupe Gp1 par l'intermédiaire du canal commun vers des nœuds d'un autre groupe.

Similairement, comme aucun nœud d'un autre groupe que le groupe Gp2 n'est présent sur le canal n°2, lorsqu'une communication d'un message transverse est à mener par le groupe Gp2, le canal de groupe n°2 est utilisé pour relayer entre nœuds du groupe Gp2 ce message transverse, tandis que le message est en outre propagé par un nœud, ou plusieurs nœuds, du groupe Gp2 par l'intermédiaire du canal commun vers des nœuds d'un autre groupe.

Afin de déterminer si un tel message reçu par un nœud est à relayer, ce nœud vérifie s'il l'a déjà reçu et relayé, ou non. Si oui, il ne relaie pas à nouveau le message. Si non, le nœud compare sa propre position géographique avec la portée indiquée par le message (exemple : disque de N km autour d'un point géographique d'origine) et si sa propre position est contenue dans la portée, il propage le message vers d'autres nœuds, via le canal de groupe vers les nœuds de son groupe, et via son canal géographique ou le canal commun à destination des autres nœuds ;

A l'instant T1, le groupe Gp1 se situe à la fois sur les cellules A, B et D et partage les cellules B et D avec le groupe Gp2. Des communications transverses vont donc pouvoir être mises en place entre les deux groupes par l'intermédiaire de chacun des canaux géographiques associées aux cellules au sein desquelles différents groupes sont présents.

Ainsi au moins un nœud du groupe Gp1 situé sur la cellule A est affecté à une communication géographique sur le canal n°1, au moins un nœud du groupe Gp1 situé sur la cellule B est affecté à une communication géographique sur le canal n°2 et au moins un nœud du groupe Gp1 situé sur la cellule D est affecté à une communication géographique sur le canal n°4. Similairement, au moins un nœud du groupe Gp2 situé sur la cellule B est affecté à une communication géographique sur le canal n°2 et au moins un nœud du groupe Gp2 situé sur la cellule D est affecté à une communication géographique sur le canal n°4. Les nœuds effectuent une diffusion sur le canal géographique qui leur est affecté indiquant au moins leur groupe d'appartenance.

Ainsi chaque nœud ayant à relayer un message transverse, reçu sur son canal de groupe, relayera le cas échéant ce message en le transmettant sur son canal géographique, si un nœud d'un autre groupe est présent sur ce même canal géographique (typiquement dans le cas présent, les nœuds ayant pour canal géographique le canal n° 2 ou n°4). De la même façon, chaque nœud ayant à relayer un message transverse, reçu sur son canal géographique, relayera le cas échéant ce message en le transmettant sur son canal de groupe.

Dans un tel cas, les communications transverses entre nœuds d'un groupe différents sont réalisées via les canaux géographiques, tandis que le canal de groupe est utilisé pour relayer un message transverse d'une cellule géographique à une autre cellule géographique : en effet, un message reçu sur le canal de groupe d'un nœud du groupe Gp2 associé à la cellule D est transmis par ce nœud sur le canal n°4 et reçu par un nœud du groupe Gp1 associé également à la cellule D. Ce dernier nœud relaie à son tour le message sur son canal de groupe. C'est ainsi qu'il est reçu par un nœud du groupe Gp1 associé à la cellule B, qui peut à son tour le transmettre sur le canal géographique n°2, à l'écoute duquel se trouve notamment un nœud du groupe Gp2 etc.

A l'instant T2, le groupe Gp1 est présent sur les cellules B et C, tandis que le groupe Gp2 est présent uniquement sur la cellule D. Les communications transverses entre ces deux groupes ne peuvent donc avoir lieu via un canal géographique et seront relayées entre des groupes différents via le canal commun.

A l'instant T3, le groupe Gp1 est présent sur les cellules C et D, le groupe Gp2 est présent sur la cellule D. Au moins un nœud de chaque groupe Gp1, Gp2 qui est présent sur la cellule D et associé au canal n°4, se signale au nœud de l'autre groupe présent sur ce même canal.

Les communications transverses entre les groupes Gp1 et Gp2 sont ainsi mises en œuvre via ce canal géographique n°4.

Dans un mode de réalisation, les cellules géographiques se chevauchent. Cette disposition permet d'éviter que deux groupes voisins situés chacun dans une cellule distinctes et dont des nœuds seraient localisés par exemple à moins de 50 mètres l'un de l'autre, ne puissent mettre en œuvre des communications transverses par l'intermédiaire de canaux géographiques. Dans un tel mode de réalisation, dès qu'un groupe se situe dans une zone de chevauchement, un nœud de ce groupe doit être affecté à chacune des cellules se chevauchant (cette mesure est intéressante quand un nœud n'a pas de capacité de réception de plusieurs canaux géographiques simultanément ; si un nœud a une capacité de réception de plusieurs canaux géographiques simultanément, alors il peut recevoir les communications ayant lieu dans les cellules adjacentes. Seul son canal d'émission change en fonction de sa position. Si tous les nœuds ont cette capacité, alors ils peuvent tous écouter les canaux des cellules adjacentes, mêmes si elles ne se recouvrent pas).

En référence à la figure 6, le groupe n°1 comporte des nœuds répartis sur les trois cellules A, B, C associées chacune à un canal géographique respectivement, canal géographique n°1, n°2 et n°3.

Le nœud N1 est dans les cellules A et C, le nœud N2 dans les cellules B et C, le nœud N3 dans les cellules A et B et le nœud N4 est dans les cellules A, B, C.

Des règles sont considérées pour sélectionner à quelle cellule affecter un nœud lorsque le nœud est sur une zone de chevauchement de deux cellules.

Tout d'abord au moins un nœud du groupe 1 situé sur la cellule A doit être associé au canal géographique n°1. De même, un nœud du groupe 1 situé sur la cellule B doit être associé au canal géographique n°2 et un nœud du groupe 1 situé sur la cellule C doit être associé au canal géographique n°3, afin de permettre les échanges transverses entre les cellules A, B et C via le canal de groupe.

Par ailleurs, on identifie le nœud du groupe 1 le plus proche du centre (repéré par une croix sur la figure 6) de chaque cellule.

Ainsi, le nœud N3 étant le plus proche du centre de la cellule A parmi les nœuds N1, N3, N4, le nœud N3 est affecté au canal géographique n°1 de la cellule A.

Le nœud N4 étant le plus proche du centre de la cellule B parmi N2, N3 et N4, il est affecté au canal géographique n°2. Le nœud N1 étant le plus proche du centre de la cellule C parmi N1, N2 et N4, il est affecté au canal géographique n°3.

Le nœud N2 est affecté au canal géographique de la cellule B car N4 est moins central dans la cellule B que ne l'est N1 dans la cellule C. N2 pourra donc remplacer N4 le cas échéant.

Les références des flèches indiquées ci-dessous sont relatives aux figures 3 et 6.

Si un message de nature géographique est reçu par le nœud N3 sur le canal géographique n°1 (cf. flèche 20), alors il le relaye via le canal de son groupe (flèche 21) à destination des autres nœuds du groupe. Chaque autre nœud le relaye alors via le canal géographique qui lui est affecté : le nœud N1 sur le canal géographique n°3 (flèche 22), le nœud N4 sur le canal géographique n°2 (flèche 23) (voire également le nœud N2 ou pas, si une règle est de relayer une seule fois sur un canal géographique d'une cellule un message reçu via un canal de groupe donné).

Dans le mode de réalisation considéré, un nœud est adapté pour ne pas renvoyer sur son canal de groupe un message qu'il a reçu sur le canal de groupe. Si le message reçu sur le canal de groupe est un message transverse, le nœud le transmet sur le canal géographique, dans la mesure où un nœud d'un autre groupe s'est signalé comme présent sur le canal géographique).

Ainsi le message est envoyé une fois sur le canal de groupe et une fois sur le canal géographique de chaque cellule A, B, C, donc 4 fois au total seulement.

On notera que la mise en œuvre de cellules géographiques avec chevauchement partiel, tel par exemple celui représenté en figure 5, permet la mise en œuvre de communications transverses sur ces canaux géographiques, sans nécessité de relayage par un canal de groupe, sur une distance correspondant à la distance de chevauchement (4 km, dans le cas de la figure 5).

Dans un mode de réalisation de l'invention mettant en œuvre une telle configuration cellulaire, par exemple celle représentée en figure 5, un nœud, après détermination de sa position et déduction de sa cellule géographique, est adapté pour mettre en œuvre les étapes suivantes :
a/ Si le nœud n'appartient à aucun groupe ou n'est pas en portée radio de son groupe, ou encore que le nombre de nœuds dans son groupe est inférieur au nombre maximum de cellules géographiques chevauchées par une même cellule (ce nombre est par exemple défini à l'étape 100 lors de la construction des cellules géographiques ; elle correspond à 3 dans le cas de la figure 5 par exemple) (optionnellement : ou si le nombre maximum de cellules géographiques chevauchées par une même cellule est supérieur au nombre de cellules distinctes se chevauchant dans lesquelles des nœuds du groupe considéré se trouvent) alors il utilise un canal commun pour assurer ses communications transverses, ainsi il sera entendu de tout nœud en proximité géographique.
b/ Si le nœud fait partie d'un groupe comportant des nœuds en nombre supérieur ou égal au nombre de cellules géographiques maximum chevauchées et dont il connaît la position à une date récente (obtenue via un échange par le canal de groupe) (et optionnellement : si le nombre maximum de cellules géographiques chevauchées par une même cellule est bien égal au nombre de cellules distinctes se chevauchant dans lesquelles des nœuds du groupe considéré se trouvent) alors :
   i/ si le nœud s'avère être le plus proche, parmi les nœuds du groupe, du centre d'une des cellules géographiques dans laquelle il se trouve, alors il sélectionne le canal correspondant à cette cellule en tant que canal géographique, il y s'identifie sur ce canal géographique et utilise ce canal pour y émettre ses communications transverses ;
   ii/ s'il se trouve ne pas être le plus proche, parmi les nœuds du groupe, du centre d'une des cellules géographiques dans laquelle il se trouve, alors il sélectionne une de ces cellules, et n'effectue qu'une écoute sur le canal géographique affecté à cette cellule sélectionnée (il ne fait pas de transmission sur ce canal géographique), afin d'être informé des nœuds d'autres groupes s'y trouvant.
c/ Si ce nœud fait partie d'un groupe de plusieurs nœuds et qu'il ne connaît pas nécessairement une position récente de chacun de ces nœuds, alors :
   - si le nombre de nœuds dont il connaît la position récente est supérieur au nombre maximum de cellules chevauchées, le nœud met en œuvre l'étape b.ii.
   - Si le nombre de nœuds dont il connaît la position récente est inférieur au nombre maximum de cellules chevauchées, le nœud met en œuvre l'étape b.i.

La présente invention permet d'accroître les capacités de transmission des communications transverses entre différents nœuds ne se trouvant pas tous simultanément sur un même canal, en utilisant simultanément plusieurs canaux de transmission. En particulier, les canaux géographiques permettent des communications transverses entre nœuds de groupes différents, dans la mesure où ces groupes comprennent chacun au moins un nœud situé dans la même cellule géographique.

Un réseau ad hoc de l'art antérieur utilise un canal commun pour échanger entre 200-300 nœuds un message de type géographique toutes les T secondes, le message étant transmissible en un cycle.

Hors réutilisation spatiale du spectre (une telle réutilisation spatiale étant peu probable en VHF), la charge du canal est égale à Nb_pions x durée_slot/T. En prenant T = 60 s, la durée d'un cycle « durée_slot » étant égale à 1 s par exemple et le nombre de nœuds Nb_pions étant égal à 60, la charge est égale à 60x1/60=100/100 soit 100%.

En mettant en œuvre l'invention, la charge du canal peut être estimée dans chaque cellule du réseau cellulaire virtuel, sous réserve qu'une orthogonalisation fréquentielle des cellules soit possible. On fait l'hypothèse qu'au moins 3 canaux sont disponibles.

Avec des cellules hexagonales de L=15 km de longueur (cf. figure 5) et un nombre maximum de nœuds de 15 par cellule (correspondant à environ un sous-groupement tactique inter-armes, ou SGTIA, par cellule) avec des nœuds de 5 km de part et d'autre (la distance de chevauchement correspond à la taille de la zone d'intérêt de chaque nœud), la surface de recouvrement correspond à 20% de la surface de la cellule pour chacune des 2 surfaces. Le nombre de nœuds à considérer est donc augmenté de 40%.

La charge maximale du canal de la cellule est égale à 15 x140% x durée_slot/T soit 35%.

Un facteur 3 en termes de charge peut donc être escompté. Ce facteur revient à accroître artificiellement la capacité d'un canal commun d'un facteur 3.

Si on considère un réseau ad hoc de l'art antérieur basé sur la technologie TDMA et utilisant exclusivement le canal commun (50% d'une trame dédiée au canal commun) pour relayer les communications transverses, comportant 600 nœuds, avec un message géographique à relayer toutes les 30 s, et sans réutilisation spatiale : la charge du canal commun est égale à 60/30 *1/50% = 400%.

En mettant en œuvre la solution cellulaire virtuelle selon l'invention et en prenant les hypothèses suivantes :
- orthogonalité spectrale des cellules (pas de pénurie de spectre), zone de recouvrement de largeur d égale à 4 km entre cellules, densité maximum de 15 nœuds par cellule de longueur 20 km ;
- 40% de la trame dédiés au canal géographique, 10% dédiés au canal commun, 50% au canal de groupe et 1 canal de groupe par canal logique et 25% du trafic relayé en inter-cellule (ratio surface interne de la cellule, surface de chevauchement) ;
alors :
la charge directe par cellule est de 15/30 ^{∗} 1 / 40% = 125%
la charge indirecte par cellule est de 15/30 ^{∗} 1 / 40% ^{∗} 25% = 31 %
la charge induite par canal de groupe est de 15/30 ^{∗} 1 / 50% ^{∗} 25% = 25%,
ce qui correspond à un gain d'un facteur 2,5 (= 400/(125+31)) en charge pour les communications transverses

Dans l'exemple décrit, on entend par canal radio une ressource de radiocommunication, qui peut correspondre à une allocation d'une fréquence radio donnée pendant un temps illimité ou pendant uniquement un intervalle de temps donné au sein d'une longueur de trame comme considéré dans les exemples ci-dessus.

Dans le mode de réalisation décrit ci-dessus, la position d'un nœud était déterminée à l'aide d'un module GPS associé au nœud. Bien entendu, la position géographique peut être identifiée ou estimée à l'aide de tout autre moyen, par exemple à l'aide d'une centrale inertielle de bord.

## Revendications

1. Procédé de communication entre des nœuds (2) d'un réseau ad hoc comportant des moyens de radiocommunications (3), ledit procédé comprenant les étapes suivantes, lesdits nœuds comportant en outre des moyens de localisation (6) et des moyens de mémorisation (7) d'une base de données (8) mettant en correspondance des zones géographiques (A, B, C, D) et des canaux radio, au moins un canal radio respectif, dit canal radio géographique, étant associé sélectivement à chaque zone géographique dans la base de données :
- détection, par au moins un nœud, de sa localisation via lesdits moyens de localisation ;
- détermination par ledit nœud d'au moins une zone géographique au sein de laquelle il est localisé, en fonction de la localisation détectée et détermination d'au moins un canal radio géographique associé sélectivement à ladite zone géographique déterminée ;
- association dudit canal radio géographique déterminé audit nœud ;
- émission et/ou réception dudit nœud de données à relayer entre nœuds du réseau ad hoc sur ledit canal radio géographique qui lui est ainsi associé,
ledit procédé étant **caractérisé en ce que** :
- les nœuds (2) du réseau ad hoc ayant été répartis en groupes, au moins un canal radio respectif, dit canal radio de groupe, est en outre affecté exclusivement à l'émission et/ou la réception radio des nœuds de chaque groupe respectif ; et **en ce que**
ledit nœud (2) signale la présence de son groupe sur ledit canal radio géographique,
ledit nœud (2) relayant un message transverse, reçu sur un canal de groupe affecté au groupe dudit nœud, en le transmettant sur ledit canal radio géographique, si un nœud d'un autre groupe est présent sur ce même canal radio géographique,
ledit nœud (2) relayant, en outre, un message transverse, reçu sur son canal géographique, en le transmettant sur le canal de groupe affecté au groupe dudit nœud.

2. Procédé de communication selon la revendication 1, un groupe comportant des nœuds (N1, N2, N3, N4) répartis dans des zones géographiques distinctes (A, B, C) , selon lequel lorsque plusieurs desdits nœuds se trouvent dans une même zone géographique, la retransmission sur le canal géographique de ladite même zone, de données reçues sur le canal de groupe dudit groupe est réalisée exclusivement par celui desdits nœuds qui est situé le plus au centre de ladite même zone géographique.

3. Procédé de communication selon l'une des revendications précédentes, lorsque un même groupe comporte des nœuds (N1, N2, N3, N4) dans des aires de chevauchement de plusieurs zones (A, B, C), le canal associé à chacune desdites zones est associé à au moins un desdits nœuds.

4. Procédé de communication selon l'une des revendications précédentes, selon lequel des zones géographiques géographiquement adjacentes et mémorisées dans la base de données sont associées à des canaux radio géographiques respectifs distincts.

5. Station émettrice/réceptrice (2) adaptée pour constituer un nœud d'un réseau ad hoc, comportant des moyens de radiocommunications (3), des moyens de localisation (6) et des moyens de mémorisation (7) d'une base de données (8),
la base de données mettant en correspondance des zones géographiques (A, B, C, D) et des canaux radio, au moins un canal radio respectif, dit canal radio géographique, étant associé sélectivement à chaque zone géographique dans la base de données,
ladite station émettrice/réceptrice étant adaptée en outre pour détecter sa localisation via lesdits moyens de localisation, pour déterminer au moins une zone géographique au sein de laquelle elle est localisée, et, en fonction de la localisation détectée, déterminer au moins un canal radio géographique associé sélectivement à ladite zone géographique déterminée ;
ladite station émettrice/réceptrice étant adaptée en outre pour émettre et/ou recevoir des données à relayer entre nœuds du réseau ad hoc, sur ledit canal radio géographique déterminé ;
ladite station émettrice/réceptrice (2), étant **caractérisée en ce que** les nœuds du réseau ad hoc ayant été répartis en groupes, au moins un canal radio respectif, dit canal radio de groupe, est en outre affecté exclusivement, dans ladite station émettrice/réceptrice à l'émission et/ou la réception radio des nœuds du groupe de ladite station, et **en ce que** ladite station émettrice/réceptrice (2) est adaptée pour signaler la présence de son groupe sur ledit canal radio géographique,
ladite station émettrice/réceptrice étant adapté pour relayer un message transverse, reçu sur le canal de groupe affecté au groupe de ladite station, en le transmettant sur ledit canal radio géographique, si un nœud d'un autre groupe est présent sur ce même canal radio géographique,
ladite station étant, en outre, adaptée pour relayer un message transverse, reçu sur son canal géographique, en le transmettant sur un canal de groupe affecté au groupe de ladite station.

6. Station émettrice/réceptrice (2) selon la revendication 5, adaptée pour retransmettre sur le canal géographique des données reçues sur le canal de groupe en fonction du résultat de la vérification que la station est située le plus au centre de ladite même zone géographique par rapport à d'autres nœuds du groupe de ladite station.

7. Station émettrice/réceptrice (2) selon l'une des revendications 5 à 6, dans laquelle des zones géographiques géographiquement adjacentes et mémorisées dans la base de données sont associées à des canaux radio géographiques respectifs distincts.

8. Programme d'ordinateur à installer dans une station émettrice/réceptrice (2) adaptée pour constituer un nœud d'un réseau ad hoc, ledit programme comprenant des instructions pour mettre en œuvre les étapes suivantes lors d'une exécution du programme par des moyens de traitement de ladite station :
- détecter la localisation de la station ;
- déterminer au moins une zone géographique au sein de laquelle ladite station est localisée, en fonction de la localisation détectée et d'une base de données mémorisée par la station, mettant en correspondance des zones géographiques et des canaux radio, au moins un canal radio respectif, dit canal radio géographique, étant associé sélectivement à chaque zone géographique dans la base de données ; et
- déterminer au moins un canal radio géographique associé sélectivement à ladite zone géographique déterminée ;
- émettre et/ou recevoir des données à relayer entre nœuds du réseau ad hoc, sur ledit canal radio géographique déterminé ;
- les nœuds du réseau ad hoc ayant été répartis en groupes, affecter de manière exclusive dans ladite station émettrice/réceptrice, au moins un canal radio respectif, dit canal radio de groupe, à l'émission et/ou la réception radio des nœuds du groupe de ladite station ;
- signaliser la présence de son groupe sur ledit canal géographique par ladite station émettrice/réceptrice,
- relayer un message transverse, reçu sur un canal de groupe affecté au groupe de ladite station, en le transmettant sur ledit canal radio géographique, si un nœud d'un autre groupe est présent sur ce même canal radio géographique,
relayer, en outre, un message transverse, reçu sur son canal géographique, en le transmettant sur un canal de groupe affecté au groupe de ladite station.

## Patentansprüche

1. Verfahren zur Kommunikation zwischen Knoten (2) eines Ad-hoc-Netzes, das Mittel (3) zur Funkkommunikation aufweist, wobei das Verfahren die folgenden Schritte umfasst und die Knoten außerdem Lokalisierungsmittel (6) und Speichermittel (7) einer Datenbank (8) aufweisen, die geographische Zonen (A, B, C, D) und Funkkanäle in Entsprechung setzt, wobei mindestens ein jeweiliger Funkkanal, genannt geographischer Funkkanal, selektiv jeder geographischen Zone in der Datenbank zugeordnet ist:
- durch mindestens einen Knoten Detektieren seiner Lokalisierung über die Lokalisierungsmittel;
- durch den Knoten Bestimmen mindestens einer geographischen Zone, an der er sich befindet, abhängig von der detektierten Lokalisierung und Bestimmen mindestens eines geographischen Funkkanals, der selektiv der bestimmten geographischen Zone zugeordnet ist;
- dem Knoten Zuordnen des bestimmten geographischen Funkkanals;
- Senden und/oder Empfangen des Knotens von weiterzuleitenden Daten zwischen Knoten des Ad-hoc-Netzes auf dem geographischen Funkkanal, der ihm so zugeordnet ist,
wobei das Verfahren **dadurch gekennzeichnet ist, dass**:
- wenn die Knoten (2) des Ad-hoc Netzes in Gruppen aufgeteilt wurden, mindestens ein jeweiliger Funkkanal, genannt Gruppenfunckanal, der Knoten jeder jeweiligen Gruppe außerdem exklusiv für das Senden und/oder Empfangen über Funk eingeteilt ist; und dass
- der Knoten (2) das Vorhandensein seiner Gruppe auf dem geographischen Funkkanal signalisiert;
- wobei der Knoten (2) eine Quernachricht weiterleitet, die auf einem der Gruppe des Knotens zugewiesenen Gruppenkanal empfangen wird, indem er sie auf dem geographischen Funkkanal sendet, wenn ein Knoten einer anderen Gruppe auf diesem selben geographischen Funkkanal vorhanden ist,
- wobei der Knoten (2) außerdem eine Quernachricht weiterleitet, die auf seinem geographischen Kanal empfangen wird, indem er sie auf dem Gruppenkanal, der der Gruppe des Knotens zugeordnet ist, sendet.

2. Kommunikationsverfahren nach Anspruch 1, bei dem eine Gruppe Knoten (N1, N2, N3, N4) aufweist, die in unterschiedlichen geographischen Zonen (A, B, C) verteilt sind, und wenn mehrere der Knoten sich in einer selben geographischen Zone befinden, die Weiterleitung von Daten auf dem geographischen Kanal derselben Zone, die auf dem Gruppenkanal der Gruppe empfangen wurden, nur von demjenigen der Knoten durchgeführt wird, der am zentralsten in derselben geographischen Zone liegt.

3. Kommunikationsverfahren nach einem der vorhergehenden Ansprüche, bei dem, wenn eine selbe Gruppe Knoten (N1, N2, N3, N4) in Überlappungsbereichen von mehreren Zonen (A, B, C) aufweist, der zu jeder der Zonen zugeordnete Kanal mindestens einem der Knoten zugeordnet wird.

4. Kommunikationsverfahren nach einem der vorhergehenden Ansprüche, nach dem die geographischen Zonen, die geographisch benachbart sind und in der Datenbank gespeichert sind, jeweilig unterschiedlichen geographischen Funkkanälen zugeordnet werden.

5. Sende/Empfangsstation (2) die angepasst ist, einen Knoten eines Ad-hoc-Netzes zu bilden, das Mittel (3) zur Funkkommunikation, Lokalisierungsmittel (6) und Speichermittel (7) einer Datenbank (8) aufweist, wobei
die Datenbank geographische Zonen (A, B, C, D) und Funkkanäle in Entsprechung setzt, wobei mindestens ein jeweiliger Funkkanal, genannt geographischer Funkkanal, selektiv jeder geographischen Zone in der Datenbank zugeordnet ist,
die Sende/Empfangsstation außerdem angepasst ist, ihre Lokalisierung über die Lokalisierungsmittel zu detektieren, um mindestens eine geographische Zone zu bestimmen, in der sie liegt, und abhängig von der detektierten Lokalisierung mindestens einen geographischen Funkkanal zu bestimmen, der selektiv der bestimmten geographischen Zone zugeordnet ist;
- die Sende/Empfangsstation außerdem angepasst ist, Daten zu senden und/oder zu empfangen, die zwischen den Knoten des Ad-hoc-Netzes auf dem bestimmten geographischen Funkkanal weiterzuleiten sind;
die Sende/Empfangsstation (2) **dadurch gekennzeichnet ist, dass**, wenn die Knoten des Ad-hoc-Netzes in Gruppen aufgeteilt wurden, in der Sende/Empfangsstation mindestens ein jeweiliger Funkkanal, genannt Gruppenfunkkanal, der Knoten der Gruppe der Station außerdem exklusiv für das Senden und/oder Empfangen über Funk eingeteilt ist und dass die Sende/Empfangsstation (2) geeignet ist, das Vorhandensein ihrer Gruppe auf dem geographischen Funkkanal zu signalisieren,
die Sende/Empfangsstation geeignet ist, eine auf dem Gruppenkanal, der der Gruppe der Station zugeordnet ist, empfangene Quernachricht weiterzuleiten, indem sie diese auf dem geographischen Funkkanal sendet, wenn ein Knoten einer anderen Gruppe auf diesem selben geographischen Funkkanal präsent ist,
- die Station außerdem angepasst ist, eine auf ihrem geographischen Kanal empfangene Quernachricht weiterzuleiten, indem sie diese auf einem Gruppenkanal sendet, der der Gruppe der Station zugeteilt ist.

6. Sende/Empfangsstation (2) nach Anspruch 5, die geeignet ist, auf dem geographischen Kanal Daten, die auf dem Gruppenkanal empfangen wurden, abhängig vom Ergebnis der Überprüfung, dass die Stationen am zentralsten in Bezug auf dieselbe geographische Zone hinsichtlich der anderen Knoten der Gruppe der Station liegt, weiterzuleiten.

7. Sende/Empfangsstation (2) nach einem der Ansprüche 5 bis 6, bei der geographische Zonen, die geographisch benachbart liegen und in der Datenbank gespeichert sind, jeweils unterschiedlichen geographischen Funkkanälen zugeordnet sind.

8. Rechnerprogramm, das in einer Sende/Empfangsstation (2) zu installieren ist, die angepasst ist, einen Knoten eines Ad-hoc-Netzes zu bilden, wobei das Programm Instruktionen enthält, um die folgenden Schritte bei der Ausführung des Programms durch Verarbeitungsmittel der Stationen durchzuführen:
- Detektieren der Lokalisierung der Station;
- Bestimmen mindestens einer geographischen Zone, in der die Station liegt, abhängig von der detektierten Lokalisierung und einer Datenbank, die von der Station gespeichert ist und die die geographischen Zonen und die Funkkanäle in Entsprechung setzt, wobei mindestens ein jeweiliger Funkkanal, genannt geographischer Funkkanal, selektiv jeder geographischen Zone in der Datenbank zugeordnet ist; und
- Bestimmen mindestens eines geographischen Funkkanals, der selektiv der bestimmten geographischen Zone zugeordnet ist;
- Senden und/oder Empfangen von zwischen Knoten des Ad-hoc-Netzes weiterzuleitenden Daten auf dem bestimmten geographischen Funkkanal;
- wenn die Knoten des Ad-hoc-Netzes in Gruppen aufgeteilt wurden, in der Sende/Empfangsstation Zuteilen in exklusiver Weise mindestens eines jeweiligen Funkkanals, genannt Gruppenfunkkanal, der Knoten der Gruppe der Station für das Senden und/das Empfangen über Funk;
- Signalisieren durch die Sende/Empfangsstation das Vorhandenseins ihrer Gruppe auf dem geographischen Kanal,
- Weiterleiten einer Quernachricht, die auf einem der Gruppe der Station zugeteilten Gruppenkanal empfangen wurde, indem sie auf dem geographischen Funkkanal gesendet wird, wenn ein Knoten einer anderen Gruppe auf diesem selben geographischen Funkkanal präsent ist,
- außerdem Weiterleiten einer Quernachricht, die auf ihrem geographischen Kanal empfangen wurde, indem sie diese auf einem Gruppenkanal sendet, der der Gruppe der Station zugeteilt wurde.

## Claims

1. A method for communicating between nodes (2) of an ad hoc network including radio communication means (3), said method comprising the following steps, said nodes further including localization means (6) and storage means (7) of a database (8) matching geographical zones (A, B, C, D) and radio channels, at least one respective radio channel, called geographical radio channel, being selectively associated with each geographical zone in the database:
- detection, by at least one node, of its location via said localization means;
- determination, by said node, of at least one geographical zone within which it is located, based on the detected location, and determination of at least one geographical radio channel selectively associated with said determined geographical zone;
- association of said determined geographical radio channel with said node;
- transmission and/or reception by said node of data to be relayed between nodes of the ad hoc network on said geographical radio channel thus associated with it,
the method being **characterized in that**:
- the nodes (2) of the ad hoc network having been distributed in the groups, at least one respective radio channel, called group radio channel, is also allocated exclusively to the radio transmission and/or reception of the nodes of each respective group; and **in that**
said node (2) signals the presence of its group on said geographical radio channel,
said node (2) relaying a cross message, received on a group channel allocated to the group of said node, by transmitting it on said geographical radio channel, if a node from another group is present on that same geographical radio channel,
said node (2) relaying also a cross message, received on its geographical channel, by transmitting it on the group channel allocated to the group of said node.

2. The communication method according to claim 1, a group including nodes (N1, N2, N3, N4) distributed in separate geographical zones (A, B, C), wherein, when several of said nodes are located in a same geographical zone, the retransmission, on the geographical channel of said same zone, of data received on the group channel of said group is done exclusively by the one of said nodes situated closest to the center of said same geographical zone.

3. The communication method according to one of the preceding claims, when a same group includes nodes (N1, N2, N3, N4) in areas overlapping several zones (A, B, C), the channel associated with each of said zones is associated with at least one of said nodes.

4. The communication method according to one of the preceding claims, wherein geographically adjacent geographical zones and being stored in the database are associated with distinct respective geographical radio channels.

5. A transmitting/receiving station (2) suitable for forming a node of an ad hoc network, including radio communication means (3), localization means (6) and storage means (7) of a database (8),
the database matching geographical zones (A, B, C, D) and radio channels, at least one respective radio channel, called geographical radio channel, being selectively associated with each geographical zone in the database,
said transmitting/receiving station further being suitable for detecting its location via said localization means, for determining at least one geographical zone within which it is located, and based on the detected localization, determining at least one geographical radio channel selectively associated with said determined geographical zone;
said transmitting/receiving station further being suitable for transmitting and/or receiving data to be relayed between nodes of the ad hoc network, on said determined geographical radio channel,
said transmitting/receiving station (2) being **characterized in that** the nodes of the ad hoc network having been distributed in the groups, at least one respective radio channel, called group radio channel, is also allocated exclusively, in said transmitting/receiving station to the radio transmission and/or reception of the nodes of the group of said station, and **in that** said transmitting/receiving station (2) is suitable for signaling the presence of its group on said geographical radio channel,
said transmitting/receiving station suitable for relaying a cross message, received on the group channel allocated to the group of said station, by transmitting it on said geographical radio channel, if a node from another group is present on that same geographical radio channel,
said station being also adapted to relay a cross message, received on its geographical channel, by transmitting it on a group channel allocated to the group of said station.

6. The transmitting/receiving station (2) according to claim 5, suitable for retransmitting data on the geographical channel received on the group channel based on the result of the verification that the station is situated closest to the center of said same geographical zone relative to other nodes in the group of said station.

7. The transmitting/receiving station (2) according to one of claims 5 to 6, wherein geographically adjacent geographical zones and stored in the database are associated with distinct respective geographical radio channels.

8. A computer program to be installed in a transmitting/receiving station (2) suitable for forming a node of an ad hoc network, said program comprising instructions for carrying out the following steps when the program is run by processing means of said station:
- detecting the location of the station;
- determining at least one geographical zone within which said station is located, based on the detected localization and a database stored by the station, matching geographical zones and radio channels, at least one respective radio channel, called geographical radio channel, being selectively associated with each geographical zone in the database; and
- determining at least one geographical radio channel selectively associated with said determined geographical zone;
- transmitting and/or receiving data to be relayed between nodes of the ad hoc network, on said determined geographical radio channel,
- the nodes of the ad hoc network having been distributed in the groups, allocating exclusively in said transmitting/receiving station, at least one respective radio channel, called group radio channel, to radio transmission and/or reception of the nodes of the group of said station;
- signaling the presence of its group on said geographical radio channel via said transmitting/receiving station,
- relaying a cross message, received on a group channel allocated to the group of said station, by transmitting it on said geographical radio channel, if a node from another group is present on that same geographical radio channel,
relaying also a cross message, received on its geographical channel, by transmitting it on the group channel allocated to the group of said station.
